# EUROPEAN PATENT APPLICATION

(11) **EP 0 840 384 A2**
(43) Date of publication of application: **06.05.1998**
(21) Application number: 97500180.1
(22) Date of filing: 29.10.1997
(51) Int. Cl.: H01M 4/26, H01M 4/32

(54) **Process for the manufacture of positive nickel hydroxide electrodes for alkaline electrical accumulators**

(30) Priority: 30.10.1996 ES 9602300
(71) Applicant: SOCIEDAD ESPANOLA DEL ACUMULADOR TUDOR, S.A., E-28027 Madrid (ES)
(72) Inventor: Chacon Guadalix, Joaquin, 28130 Alalpardo (Madrid) (ES); Soria Garcia-Ramos, Ma Luisa, 28033 Madrid (ES); Trinidad Lopez, Francisco, 28804 Alcala de Henares (Madrid) (ES)
(74) Representative: Hernandez Covarrubias, Arturo

(57) **Abstract**

Process for the manufacture of positive electrodes for alkaline electrical accumulators, the electrodes of which comprise a porous substrate made of nickel or of a nickel-plated material, which serves as support to an active material based on nickel hydroxide, being said active material applied over the support in two successive stages ; a first main phase of mechanical pasting, during which most of the active material is applied, and a second complementary phase of electrochemical impregnation.

## Description

The present invention refers to a high capacity positive nickel electrode for alkaline electrochemical accumulators, and the manufacturing process thereof.

Positive nickel electrodes used in alkaline electrochemical accumulators, such as Ni/Cd, Ni/Zn, Ni/Fe, Ni/H₂, and nickel metallic hydrides, are usually prepared by two techniques.

The first and oldest of them, consists in placing the active material, nickel hydroxide, mixed with an additive which is a conductor, within a metallic structure conformed in such a way that it allows the passage of the electrolyte into its interior, in order to provide a suitable medium for the electrochemical reaction to take place, stopping at the same time the particles of powder of said active material from escaping to the outside, apart of acting as conductor and collector of the current which passes through tne system. This technique has the advantage of being carried out with low production costs, although, on the other hand it involves a great number of steps for the preparation of the electrodes, with a great variety of intermediate products of different natures. Additionally, the specific energy characteristics of this kind of electrodes, do not adapt to the severe charging and discharging regimes employed in many current applications.

The second technique consists in depositing the active material, nickel hydroxide, together with a number of additives which improve its physical and chemical properties, on a grid-like conducting support, by means of chemical or electrochemical procedures. This technique reduces the number of intermediate products involved in the elaboration of electrodes, although its increases the cost of the process to remarkable levels. On the other hand, in this case the electrodes do comply with the requirements of the newest applications of these accumulators, in relation to charging and discharging at high power regimes, with no appreciable loss in their good specific energy characteristics.

With the object of reducing the cost and simplifying the process of obtaining positive nickel electrodes, with no loss in their good behaviour in high power charges and discharges, new materials and techniques have been developed, in the last years, which permit the manufacture of new accumulators adapted to the requirements of the most modern applications.

Among those conducting materials used as supports for the active material, the most remarkable ones, from the point of view of their widespread use, are those electrode substrates composed by non-woven nickel fibres or by synthetic or natural fibres coated with nickel or some other metal, or also by foams of polymeric material which are coated with nickel, such as those described in German patents 2.251.160 and 2.418.742, in French patents 2.472.842 and 80.11080 and in the United States patent 4.312.670, among others.

With regard to the techniques for the introduction of the active material into the support, the last years have seen the development of several procedures for the elaboration of a paste of the active materials, and for its subsequent application and mechanical pasting over the support. The United States patents 4.217.939 and 4.251.603 and the French patent 2.618.949, describe some methods for the pasting of the nickel hydroxide on these type of supports.

However, in spite of the improvements that have taken place in the latest studies carried out, a poor behaviour has been observed. of the positive nickel electrodes obtained by means of these techniques and with these materials, regarding the requirements demanded by certain applications such as portable tools, edge-guided vehicles, starting of high-performance insulated motors, etc. Such aspects as the electrical conductivity of the active material (for high power applications) and the mechanical stability in successive charge / discharge cycles (life of the accumulator), which were already solved in the previous techniques, have not been yet totally solved for these new, simpler and more economical processes. In the first case the problem is abated by adding, to the active positive material, powdered conducting materials, such as nickel or graphite. In the second case. the incorporation of cobalt compounds into the crystalline lattice of the nickel hydroxide. improves the behaviour and the stability of these electrodes throughout their life.

The present invention refers to an improved positive nickel electrode. capable of complying with the current requirements of high power and long lasting applications, as well as to the manufacturing procedure of the same, by a process for the introduction of the active material which is simpler and more productive than those existing to date. using support materials for the active material of the metallic fibres or foam type or of the metal coated plastic fibre type.

The positive nickel electrode of the present invention is constituted by a conducting support for the active material. formed by a three-dimensional structure of nickel fibres or foam, which is filled with the active material by means of a mechanical pasting process, as main step, followed by a last step involving electrochemical impregnation, to adapt the crystalline structure of the active material, nickel hydroxide, to the high power and long duration characteristics of the alkaline electrochemical accumulators manufactured with said electrode. Additionally, the use of this process results in a great uniformity in weights during the manufacture of said electrodes, narrowing the manufacturing tolerances and hence, reducing the cost.

The support-conductor of the active material is composed by non-woven fibres made of nickel, alloys with a high nickel content, nickel-plated plastic or metallic fibres, or by any other nickel-plated plastic or metallic structure, which forms a sheet of 0.5 to 4.0 mm of thickness, preferably from 1.5 to 2.5 mm, and which as a whole exhibits an 82 to 98% porosity, preferably between 90 and 96%. This support is cut to specific sizes, and a current connecting tag is welded to it, which will subsequently be attached to the terminal, according to the design of the corresponding battery.

The first phase of the application of the active material, nickel hydroxide, to the support substrate, contributes between 75 and 95% of the final weight of the same. The elaboration of the paste is based on the dispersion of the active material in a liquid medium. The liquid medium may be water, alcohol, or a mixture of the two in a specific ratio, to which a number of agents are added, during a first pre-solution step, to confer to the medium certain viscosity and binding capacity characteristics. These agents are natural or semi-synthetic polysaccharides such as gum Arabic, "carboxymethylcellulose, ethylcellulose or hydroxypropylmethylcellulose at a concentration of between 0.5 and 1.5%. After this pre-solution process, the active material, nickel hydroxide, is added to the liquid medium, and is dispersed into it by means of an agitation and milling device. The particles of the active material have an average size below 50µm. After obtaining the paste, conducting particles, which can be nickel or graphite in the form of a powder or fibres with a diameter of 10 to 50 µm and a length of 1 to 20 mm, in an amount ranging from 5 to 20%, are uniformly added to it. The final paste is extended on the surface of the support substrate by mechanical means which provide a uniform distribution of the same, both on the inside as on the outside of the three-dimensional metallic grid. Subsequently. the intermediate electrode obtained is dried in an oven at a temperature of between 40 and 70°C for a period which can be of 4 to 10 hours.

Once the intermediate electrode has been dried, the second phase involving the introduction of the active material begins, which will provide the electrode with the necessary amount of nickel hydroxide according to the design of said electrode, that is, between 5 and 25% of the aforementioned material. This phase is known as electrochemical impregnation, and is carried out by means of the cathodic polarisation of the, previously pasted. intermediate electrode, in an aqueous solution of a salt of the metal, nickel, which contains a reducible anion such as nitrate, permanganate, chlorate or chromate, the oxidation-reduction potential of which is more positive than that of the metallic cations present in the solution. Essentially, a solution of nickel nitrate is used at a 3-6 M concentration, which contains between I and 10% of cobalt nitrate, preferably between 4-6%, exhibiting a pH of between 3 and 5. During electrochemical impregnation, the solution is maintained at a temperature of between 25 and 45 °C, by means of a heating and refrigeration system, with recirculation of the same by an external pumping system. The cathodic polarisation of the intermediate electrode, in the solution, is carried out for 5 to 20 minutes, passing a current density of between 10 and 25 A/dm². A combination of sheets made of the metal, nickel, and baskets of an inert material, preferably titanium, which contain within them small pieces of nickel, of between 10 and 30 mm diameter, are used as anodes. This results in a greater homogeneity in the supply of ions to the solution, which will subsequently deposit on the intermediate electrode, and also in a stability in the potential difference between the anode and the cathode during the impregnation process.

After this second phase of impregnation, the electrodes are washed with distilled water and are dried in an oven at 40-70 °C for a period of 15 to 60 minutes. Subsequently the thickness of the electrodes is adjusted by means of a mechanical calendering process, as a function of their type and final application they are going to have.

### EXAMPLE

A group of 150 electrodes has been prepared, by cutting nickel fibre sheets of 91% porosity and 2.00 mm thickness, into rectangular pieces 100 x 130 mm² in size. A terminal tag, made of nickel-plated steel 0.25 mm in thickness and with the appropriate design to facilitate the assembly of the battery and the conduction of the current towards the terminal, was welded to each of these pieces.

On the other hand, for the first impregnation phase, water was used, with 0.9% of the sodium salt of carboxymethylcellulose previously dissolved in to it, and to which nickel hydroxide was added, with agitation. to disperse it, so as to finally yield a paste with an approximate viscosity of 10.000 cps. Additionally, 7% nickel powder was added to it and dispersed homogeneously throughout the mixture. The electrodes were coated with the paste with a roller-based application device , and were dried in an oven at 60 °C for 4 hours, thus obtaining a weight in active material of 90% in average in relation to the total (0.35 g/cm²), in the intermediate electrodes, with a maximum deviation of ±2%.

Subsequently the electrochemical impregnation of the intermediate electrodes was carried out, using a 4.5 M solution of nickel nitrate which contained 6% cobalt nitrate, at a pH of 4.2. The temperature of the process was of 28 °C in the solution, where the electrodes were cathode polarised with a current density of 16 A/dm² for 7 minutes.

Finally the electrodes were washed with distilled water and were dried at 50 °C for 1 hour, and were subsequently calendered to a final uniform thickness of 2.0 mm.

The final weight of active substance in each electrode was 0.38 g/cm², with a 2% dispersion in the values for the same. This amount of active substance allowed us to obtain an electrical capacity of 59 mAh/cm² and a duration, in charge / discharge cycles, greater than that obtained with pasted electrodes of similar characteristics.

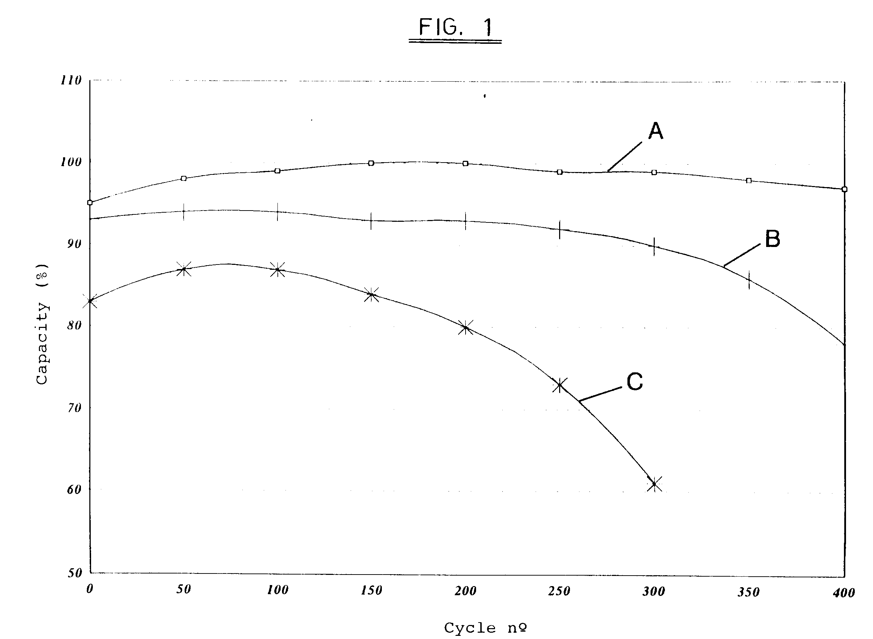

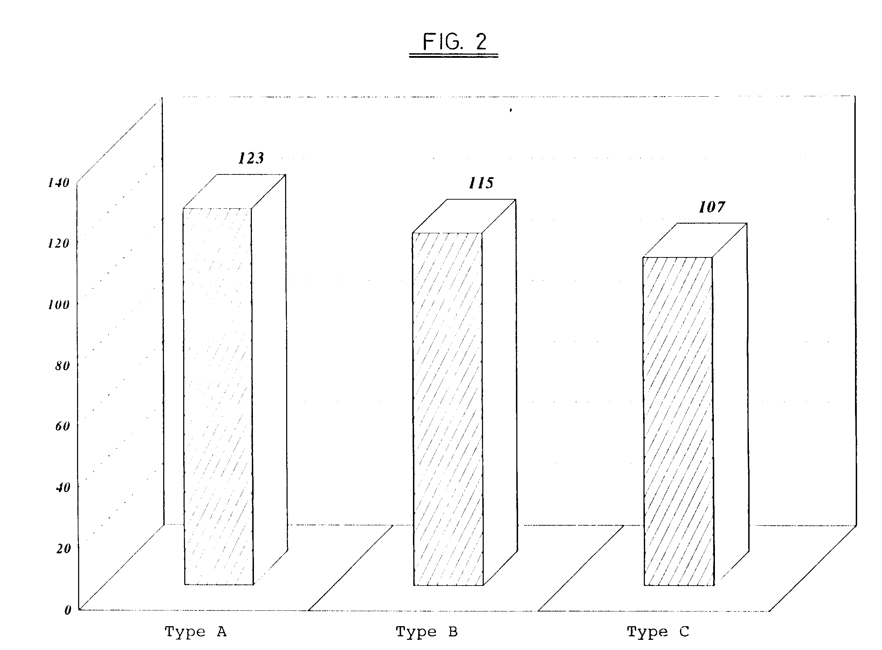

In figures 1 and 2 a comparison is made of the specific capacity and the durauon expressed in cycles of this type of electrodes (type A), in relation to others of similar features, manufactured by means of a solely electrochemical impregnation process (type B) or by means of a mechanical pasting process (type C).

Figure 1 corresponds to a diagram of charge / discharge cycles from positive nickel electrodes, providing a representation of the percentage capacity in relation to the maximum obtained with the type of electrodes object of the present invention. In this diagram, curve A corresponds to electrodes manufactured according to the invention, curve B to similar electrodes manufactured by an electrochemical impregnation process, and curve C to electrodes manufactured by a mechanical pasting process.

Figure 2 represents the specific capacity, measured in mAh/g of electrode, of positive nickel electrodes manufactured according to the invention, (type A), manufactured by means of an electrochemical impregnation process (type B), and manufactured by a mechanical pasting process (type C).

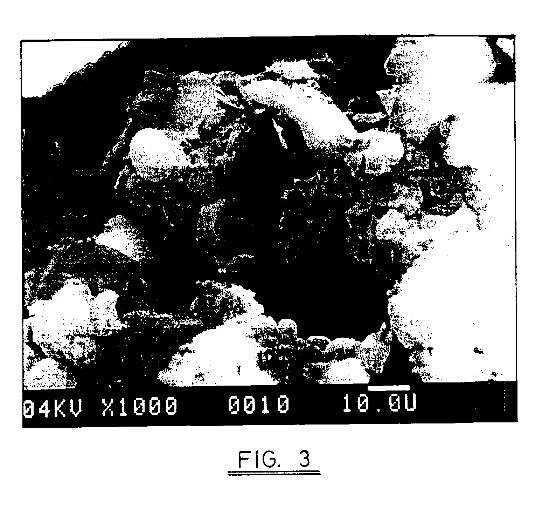

Finally, figure 3 shows the appearance of the active material on the electrode obtained according to the procedure object of the present invention, as seen with the aid of a high resolution electron microscope.

## Claims

1. Process for the manufacture of positive electrodes for alkaline electrical accumulators, the electrodes of which comprise a porous substrate made of nickel or of a nickel-plated material, which serves as support to an active material based on nickel hydroxide, characterised in that the active material is applied over the support in two successive stages: a first main phase of mechanical pasting, during which most of the active material, in the form of a paste, is applied onto the support, with a uniform distribution in the inside and outside of the same, and a second complementary phase of electrochemical impregnation, which is carried out by means of the cathodic polarisation of the previously pasted support, which confers to the active material the adequate crystalline structure to withstand many cycles of charge and discharge, and provides the electrode with the ideal physical characteristics for its handling during the diverse manufacturing stages.

2. Process according to claim 1, characterised in that the paste of the active material is composed by a dispersion of nickel hydroxide in an aqueous medium, composed by a pre-solution of natural or semi-synthetic polysaccharide agents in water, alcohol or a mixture of both ; to which dispersion a conducting agent, constituted by graphite or nickel conducting particles, is uniformly added.

3. Process according to claim 1 or 2, characterised in that during the first phase of mechanical pasting, a fixation of the active material is obtained, comprised between 75 and 95% of the total weight of active material in the electrode.

4. Process according to any of the previous claims, characterised in that the paste of active material applied during the first phase of mechanical pasting is subjected to a drying stage at temperatures comprised between 40 and 70 °C, for a period of time comprised between 4 and 10 hours.

5. Process according to claim 2, characterised in that the pre-solution cited earlier includes between 0.5 and 1.5% of polysaccharide agents.

6. Process according to claim 1, characterised in that the second phase of electrochemical impregnation is carried out in a 3-6 M solution of nickel nitrate with 1-10% of cobalt nitrate, at a pH of 3-5 and with a cathodic polarisation of 10-25 A/dm² for 10-20 minutes, at a temperature comprised between 25 and 45 °C.

7. Process according to claims 1 and 6, characterised in that, once the second phase of electrochemical impregnation has concluded. the set is subjected to a wash with distilled water and is subsequently dried at a temperature comprised between 40 and 70°C. for 15 - 60 minutes. finally adjusting the thickness of the electrode to a specific value. preferably by calendering.

8. Process according to any of the previous claims, characterised in that the first and second phases of application of the active material are carried out over a support in the shape of an endless loop, which is subsequently cut to the dimensions of the electrodes corresponding to the design of the battery.
